# EUROPEAN PATENT APPLICATION

(11) **EP 1 528 512 A2**
(43) Date of publication of application: **04.05.2005**
(21) Application number: 04256609.1
(22) Date of filing: 27.10.2004
(51) Int. Cl.: G06T 17/00

(54) **Graphic decoder, image reproduction apparatus and method for graphic display acceleration based on commands**

(30) Priority: 28.10.2003 KR 2003075580; 15.10.2004 KR 2004082818
(71) Applicant: Samsung Electronics Co., Ltd., Suwon-city, Gyeonggi-do (KR)
(72) Inventor: Chung, Hyun-kwon, Seoul (KR)
(74) Representative: Robinson, Ian Michael

(57) **Abstract**

A 2-dimensional graphic decoder having a command based graphic display accelerating function, a method for accelerating graphic display therefor and an image reproducing apparatus are provided. The method for accelerating graphic display includes: interpreting graphic data (322), converting graphic data into at least one simplified accelerating command data (324), and storing the data; and by executing at least one stored accelerating command data (324), displaying a graphic image, wherein storing the data and displaying the graphic image are performed independently. In particular, the accelerating command data (324) may include a horizontal line draw command or a vertical line draw command for quickly drawing at least one graphic image on the screen, which is obtained by interpreting graphic data (322) to generate a polygon and performing scan conversion of the generated polygon. Accordingly, with the graphic display accelerating command using the horizontal line draw, the display processing function for a 2-dimensional graphic image can be enhanced.

## Description

The present invention relates to reproduction of an image, and more particularly, to a 2-dimensional graphic decoder having a command based graphic accelerating function, and a method for accelerating graphic display therefor, and an image reproduction apparatus.

In an image reproduction apparatus there is a problem that all images displayed on the screen are expressed by pixels such that heavy load of calculation is put on a central processing unit (CPU). Accordingly, in order to reduce the calculation load on the CPU, the image reproduction apparatus generally provides a graphic display accelerating function. The graphic display accelerating function is to improve a graphic display processing function by reducing the load to the CPU by separately supporting a graphic display processing command, or by inserting a hardware circuit for a graphic display processing function in a graphic display adaptor.

Leading conventional 2-dimensional or 3-dimensional graphic display accelerating technologies use methods for processing complex figures and images by improving the performance of a CPU. Such examples include multimedia extension (MMX) technology of Intel, Co., and 3D Now technology of AMD. In order to faster perform addition or multiplication of matrices, the MMX technology uses a method for improving the processing speed of a CPU by adding a function for performing addition or multiplication of multiple registers by one command to the CPU command set. This command is referred to as a single instruction multiple data (SIMD), and a plurality of SIMD commands are included in a CPU command set.

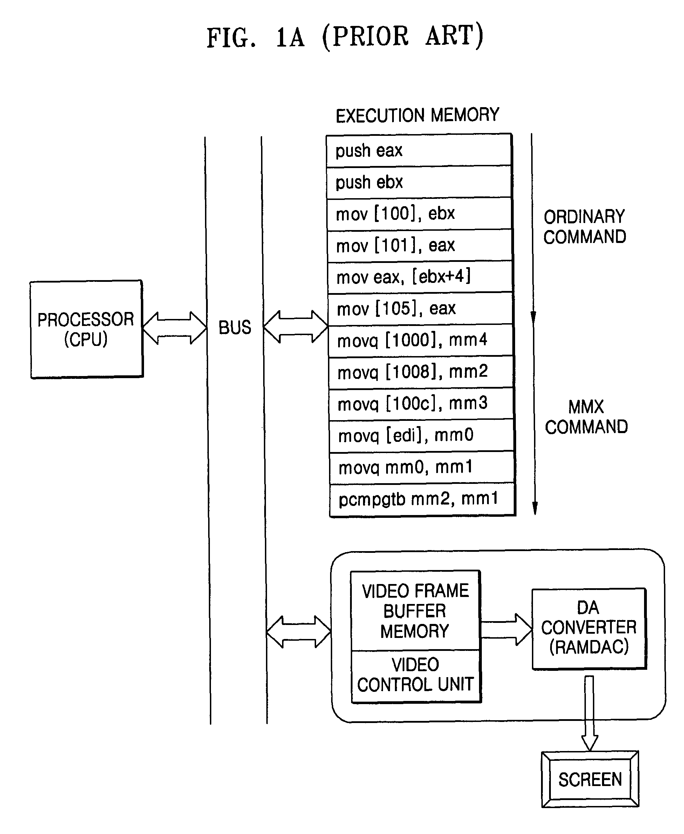

Figure 1A illustrates the structure of an image reproducing apparatus using a plurality of SIMD commands.

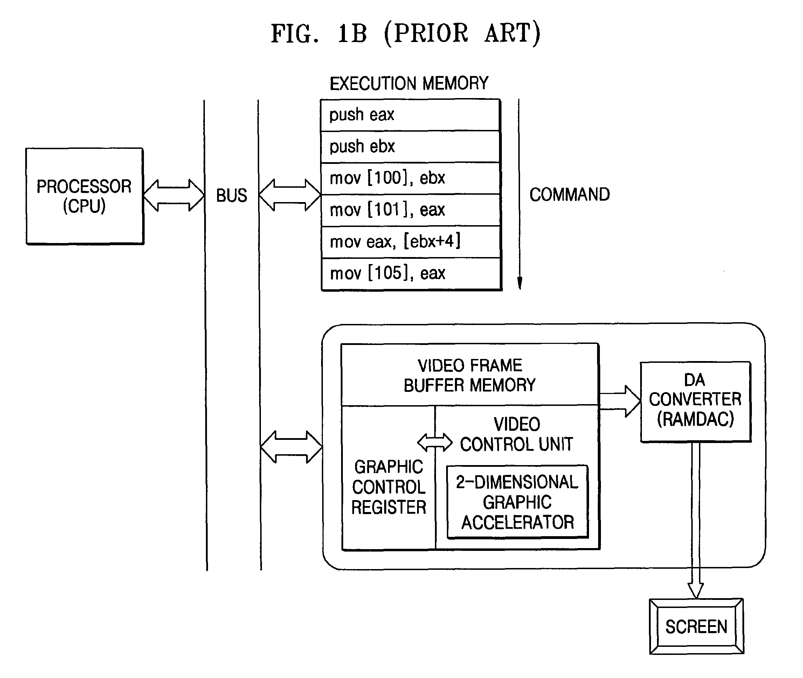

Another method for providing a graphic display accelerating function is to reduce calculation load on the CPU by putting the graphic processing function on a hardware circuit for graphic display acceleration. A game machine with a conventional 2-dimensional display accelerator chip embedded has an embedded hardware circuit for 2-dimensional graphic display acceleration. Since the 2-dimensional graphic display accelerator chip processes graphic display with an embedded graphic display function in the form of display functions, the processing speed of the CPU in graphic mode can be enhanced greatly. Figure 1B illustrates the structure of an image reproducing apparatus having a 2-dimesional graphic display accelerating chip.

However, accelerated display functions, for example, line, polygon, and quadrangle drawing and block copying, and implementation technologies for the 2-dimensional graphic display accelerator chip supported by respective manufacturers of graphic cards are different. Also, when a graphic display job that is not embedded in a graphic display accelerating chip is performed, for example, drawing a figure having a curve, it is difficult to expect the normal performance for the job. In addition, if the resolution to be implement is different from that supported by a 2-dimensional graphic accelerating chip, or if a true color is to be expressed in a higher resolution, it is difficult to increase the graphic processing speed.

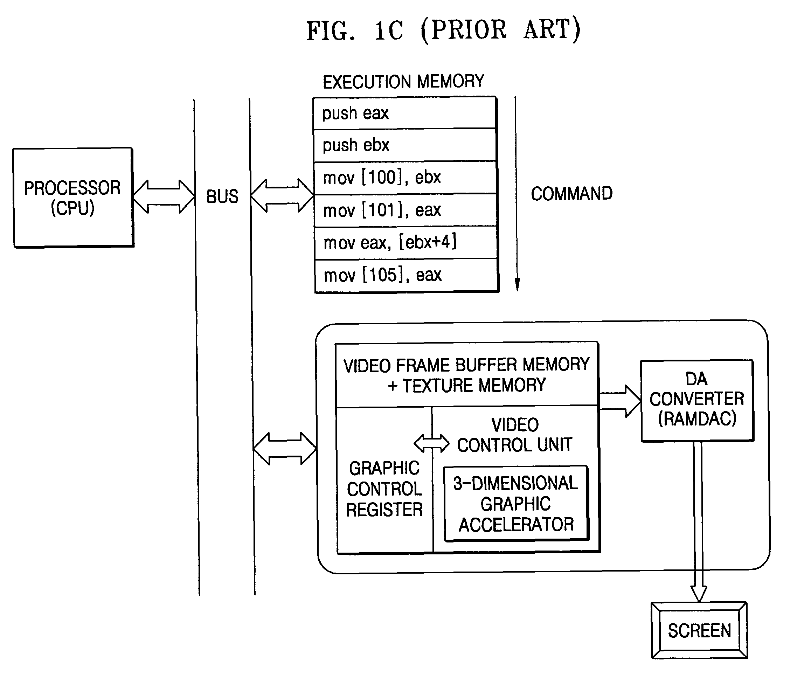

Another method providing a graphic accelerating function is to reduce the load of 3-dimensional geometry calculation processing and rendering processing for display of the CPU by using a 3-dimensional graphic display accelerator chip processing 3-dimenstional vector calculation as shown in Figure 1C. Using polygons, such as a circle, a rectangle, a triangle, and lines, as a minimum unit forming a screen, a vector graphic is a graphic expressed in the form of a numerical formula, and is also referred to as a polygon graphic. In order to express detailed feeling such as a curve and tone, the vector graphic uses a variety of special effects such as rendering, shading, and texturing, and in order to reduce the consequent calculation load on the CPU, uses a 3-dimensional graphic accelerator.

However, if a 2-dimensional vector graphic is used in a 3-dimensional graphic display accelerating environment, when a polygon containing a circle or a curve forming the polygon is to be expressed, a vertex processing using a complicated 3-dimensional vector is needed. Accordingly, a high performance graphic processor for the 3-dimenstional calculation and image mapping calculation of a texture image filling the vertex is required.

Meanwhile, as the conventional consumer electronics (hereinafter referred to as CE) is combined with the Internet technology, a strong graphic display function such as a 2-dimensional vector animation expressed on an Internet web page is needed. However, the conventional CE products, for example, an image reproducing apparatus such as a digital versatile disc (DVD) reproducing apparatus, has a CPU of a 150 MIPS level, not a high performance CPU of the 800 MIPS Pentium level, such that there is a limit to the graphic display processing performance. That is, there is a problem that only a limited scope of graphics including text or simple image, can be expressed and it is difficult to implement a 2-dimensional vector graphic animation function such as an Internet web page.

Also, even when the conventional 2-dimensional graphic display accelerating technology is used, the complicated 2-dimensional vector calculation and functions for processing a variety of curves should be included in the graphic display accelerator chip such that design of a hardware circuit is complex. In addition, it is impossible to include all 2-dimensional curve processing functions in a hardware circuit, for a variety of problems such as the limited size of a hardware circuit, raising the price of a hardware circuit and peripheral components, and operational heating and following noise generation of a fan, occur.

According to the present invention there is provided an apparatus and method as set forth in the appended claims. Preferred features of the invention will be apparent from the dependent claims, and the description which follows.

The present invention provides a 2-dimensional graphic decoder having a command based graphic display accelerating function.

The present invention also provides a method for implementing a graphic display accelerating function.

The present invention also provides an image reproducing apparatus with a 2-dimensional graphic decoder having a command based graphic display accelerating function.

According to an aspect of the present invention, there is provided a method for accelerating graphic display including: interpreting graphic data, converting graphic data into at least one simplified accelerating command data, and storing the data; and by executing at least one stored accelerating command data, displaying a graphic image, wherein storing the data and displaying the graphic image are performed independently.

The accelerating command data may include at least one horizontal line draw command or vertical line draw command which is obtained by interpreting the graphic data, generating a polygon, and performing scan conversion of the generated polygon, and is to quickly draw the graphic image on the screen.

The converting and storing may be performed by separate software in order to interpret a variety of the graphic data.

In the converting and storing, at least one of the converted accelerating commands may be stored in a predetermined memory area (224).

The displaying of the graphic image may be performed by a separate hardware circuit in order to increase the display speed of the graphic image.

The accelerating command data may include at least one of a command to draw a pixel, a command to draw a horizontal line or a vertical line with one color, a command to draw a horizontal line or a vertical line to which a bitmap image pattern is applied, a command to draw a horizontal line or a vertical line to which a linear gradient image pattern is applied, a command to draw a horizontal line or a vertical line to which a radial gradient image pattern is applied, a command to repeat a previously executed horizontal or vertical line draw command, to a predetermined coordinate of a horizontal line or a vertical line by increasing or decreasing the vertical coordinate or horizontal coordinate of the previous command, an Affine translation command (AffineTranslate) adjusting the size or location of a bitmap image or a gradient pattern as filler data applied to a command to draw a horizontal line or a vertical line, a color translation command (ColorTranslate) translating colors of pixels drawn on a horizontal line or a vertical line, a branch command to branch to the location of the accelerating command data at another address, and execute the accelerating command of the address, a command specifying the display location and layer of moving pictures which are blended with the graphic image and displayed, and a command specifying the color of a background area excluding the moving picture area which is blended with the graphic image and displayed, and the color of the moving picture area in a state where there is no video signal.

According to another aspect of the present invention, there is provided a graphic decoder including: an accelerating command conversion unit decoding graphic data read through an external channel, converting the data into at least one simplified accelerating command data, and storing the accelerating command data in a predetermined memory area; and an accelerating command processing unit executing at least one stored accelerating command data and displaying a graphic image, wherein the accelerating command conversion unit and the accelerating command processing unit operate independently to each other by using the predetermined memory area.

The accelerating command conversion unit may generate a polygon by interpreting the graphic data, convert the graphic data into at least one accelerating command data item obtained by performing scan conversion of the generated polygon, and store the accelerating command data in the predetermined memory area, and the accelerating command data may include a horizontal line or a vertical line draw command to quickly draw the graphic image on the screen.

The accelerating command conversion unit may be implemented by separate software in order to interpret a variety of the graphic data.

The accelerating command processing unit may be implemented as a separate hardware circuit in order to increase the display speed of the graphic image.

The external channel may include a detachable storage medium that is easily detachable from a reproducing apparatus, a storage medium embedded in a reproducing apparatus, or a network medium.

According to still another aspect of the present invention, there is provided a reproducing apparatus including the graphic decoder.

A graphic image output through the graphic decoder and moving pictures output by decoding audio-visual (AV) data read from the external channel may be overlaid and one image is displayed.

According to yet another aspect of the present invention, there is provided a computer readable recording medium having embodied thereon a computer program for executing the method for accelerating graphic display.

The above and other features and advantages of the present invention will become more apparent by describing in detail exemplary embodiments thereof with reference to the attached drawings in which:
Figures 1A through 1C are reference diagrams explaining the conventional graphic display accelerating technology;
Figure 2 is a block diagram of an image reproduction apparatus with a 2-dimensional graphic decoder having a command based graphic display accelerating function according to a preferred embodiment of the present invention;
Figure 3 illustrates an image reproduction process using a command based graphic display accelerating function according to a preferred embodiment of the present invention;
Figure 4 is a diagram explaining in detail the structure of a 2-dimensional graphic display accelerating command processor shown in Figure 2;
Figure 5 illustrates a page setup process of a 2-dimensional graphic decoder;
Figure 6 illustrates a process for accelerating graphic display through a page setup process;
Figure 7 illustrates an example of the structure of a graphic display accelerating command used in a 2-dimensional graphic decoder according to the present invention;
Figure 8 illustrates an example of 2-dimensional vector graphic expressed by polygon data;
Figure 9 illustrates the result of scan conversion of a 2-dimensional vector graphic shown in Figure 8;
Figure 10 illustrates an example of a graphic display accelerating command according to the present invention;
Figure 11A illustrates an example of a graphic display accelerating command and filler data;
Figure 11B illustrates a graphic image displayed when the graphic display accelerating command and filler data shown in Figure 11A are executed;
Figures 12A through 12E illustrate an example of a code implementing a horizontal line draw command that is a graphic display accelerating command according to the present invention;
Figures 13A through 13C illustrate an example of filler data according to the present invention; and
Figure 14 illustrates an application example of the present invention in which moving pictures in which 2-dimensional graphics and audio-visual (AV) data are decoded are blended and displayed on one screen.

Hereinafter, the present invention will be described in detail by explaining preferred embodiments of the invention with reference to the attached drawings.

A 2-dimensional graphic decoder having a command based graphic display accelerating function according to the present invention includes a graphic data presentation engine interpreting graphic data input from an external channel, converting into a graphic display accelerating command, and storing the command, and a 2-dimensional graphic display accelerating command processor displaying a graphic on the screen using the stored command.

In particular, preferably, the 2-dimensional graphic display accelerating command processor is implemented as a hardware circuit in order to improve the graphic display processing function.

Also, preferably, the graphic display accelerating command is implemented as a horizontal line or a vertical line draw command.

Accordingly, the command based graphic display accelerating function can be implemented and the graphic display processing function is improved.

Furthermore, a method in which horizontal line or a vertical line draw commands are received directly from an external channel and without conversion by the graphic data presentation engine, the commands are input to the 2-dimensional graphic display accelerating command processor and executed can also be provided.

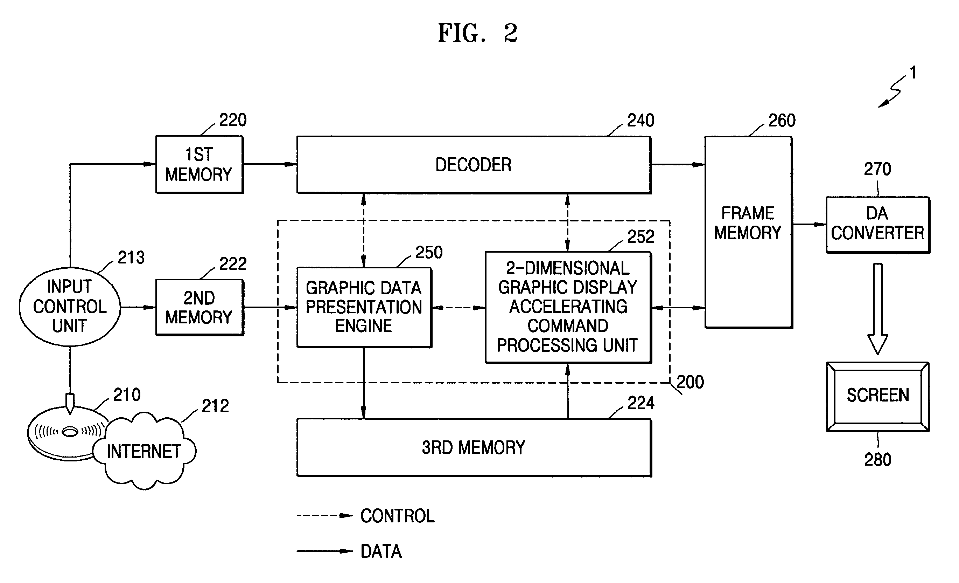

Figure 2 is a block diagram of an image reproduction apparatus with a 2-dimensional graphic decoder having a command based graphic display accelerating function according to a preferred embodiment of the present invention.

Referring to Figure 2, the image reproducing apparatus 1 according to the present invention includes a reading unit 210 and 212, an input control unit 213, memories 220, 222 and 224, an AV decoder 240, a 2-dimensional graphic decoder 200, a frame buffer memory 260, and a DA converter 270.

The reading unit 210 and 212 reads AV data or graphic data from an external channel. The external channel indicates a medium from which image data such as AV data or graphic data is read, and includes a recording medium such as an optical disc and a network medium such as the Internet. AV data is moving picture data compression encoded complying with a standard such as that of the Moving Picture Experts Group (MPEG). Graphic data generally indicates markup documents such as a hypertext markup language (HTML) document, an image file such as a joint photographic experts group (JPEG) file and a portable network graphics (PNG) file, Macromedia's flash files, and graphic data such as Java and font data. The input control unit 214 loads AV data or graphic data on respective memories disposed separately. If AV data and graphic data are multiplexed into one file, a function for demultiplexing this can be included.

The memories 220, 220, and 224 include a first memory 220, a second memory 222, and a third memory 224. The first memory 220 is a buffer memory storing AV data read from the external channel by the reading unit 210 and 212, and the input control unit 214. The second memory 222 stores graphic data read from the external channel. The third memory 224 is a memory used by a 2-dimensional graphic decoder 200, which will be explained later, and a graphic display accelerating command and filler data obtained by converting graphic data. Depending on the intention of the designer, the first through third memories 220 through 224 can be implemented as separate memories or in one memory by dividing addresses for respective memories 220 through 224.

The AV decoder 240 decodes AV data stored in the first memory 220 and displays moving pictures.

The 2-dimensional graphic decoder 200 includes a graphic data presentation engine 250 and a 2-dimensional graphic display accelerating command processor 252. The graphic data presentation engine 250 interprets read graphic data, converts into a graphic display accelerating command and filler data, and stores the command and data in the third memory 224. Preferably, the graphic presentation engine 250 is implemented by software which is executed in the CPU such that a variety types of graphic data can be flexibly interpreted. Hereinafter, the graphic presentation engine 250 will be referred to as a presentation engine. The 2-dimensional graphic display accelerating command processing unit 252 executes the graphic display accelerating command and the filler data stored in the third memory 224 and displays 2-dimensional graphic. Preferably, the 2-dimensional graphic display accelerating command processing unit 252 is implemented as a hardware circuit in order to quickly execute the simplified graphic display accelerating command and the filler data. Hereinafter, the 2-dimensional graphic display accelerating command processing unit 252 will be referred to as a display accelerating command processing unit.

The frame buffer 260 stores moving pictures output from the AV decoder 240 and 2-dimensional graphic images output from the 2-dimensional graphic decoder 200. The moving pictures and graphic images are blended and the blended digital signal is converted into an analog signal through the DA converter, and displayed on the screen. Accordingly, an image reproducing apparatus such as a DVD or DTV can provide interactive contents displaying moving pictures together with related 2-dimensional graphic images on one screen.

If the conventional 2-dimensional graphic display accelerator is used, text or table information included in the graphic data described above, for example, a markup document, should be interpreted and converted into display functions, such as a line, a quadrangle, and a circle, that can be processed by the 2-dimensional graphic display accelerator can process. Also, a function for outputting a bitmap by interpreting a JPEG file or a PNG file should be included. Also, functions for processing curves, straight lines, and polygons of Java or flash files should be included. Accordingly, the hardware structure of the conventional 2-dimensional graphic display accelerator becomes complicated.

However, the 2-dimensional graphic decoder 200 according to the present invention can more simply implement the graphic display accelerating function by using a horizontal line or a vertical line draw command, which will be explained later, as a graphic display accelerating command. The 2-dimensional graphic decoder 200 according to the present invention will now be explained in more detail.

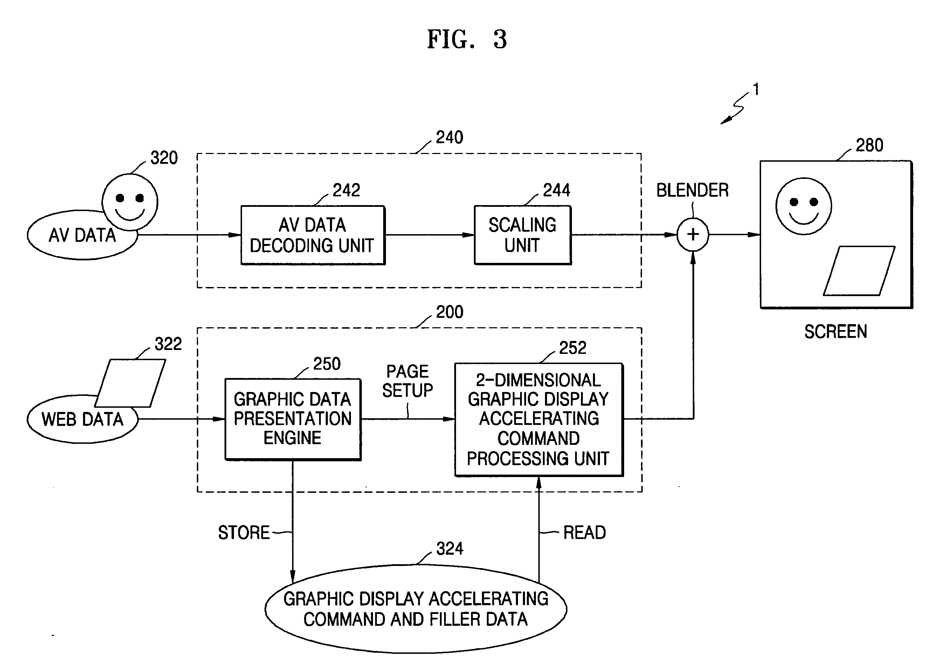

Figure 3 illustrates an image reproduction process using a command based graphic display accelerating function according to a preferred embodiment of the present invention.

Referring to Figure 3, the 2-dimensional graphic decoder 200 interprets graphic data 322 read from the external channel, converts into a graphic display accelerating command and filler data 324, and stores in the third memory 224. Also, the 2-dimensional graphic decoder 200 reads the stored graphic display accelerating command and filler data, and displays a 2-dimensional graphic image. Hereinafter, the graphic display accelerating command and filler data 324 stored in the third memory will be referred to as graphic display accelerating command data. On the screen 280, moving pictures decoded through the AV decoder 240 and the 2-dimensional graphic image interpreted through the 2-dimensional graphic decoder 200 are displayed together.

More specifically, the presentation engine 250 interprets the graphic data 322, generates the graphic display accelerating command data 324, and stores the data 324 in the third memory. If graphic display accelerating command data for a screen to be drawn is completed, the presentation engine 250 sends a page setup signal to the display accelerating command processing unit 252, in order to display the screen. The display accelerating command processing unit 252 receiving the page setup signal reads the stored graphic display accelerating command data 324 from the third memory, interprets and executes the data 324. A graphic image generated by executing the graphic display accelerating command data is blended with moving pictures and stored in the frame buffer. The stored 2-dimensional graphic image and moving pictures are overlaid on one screen and displayed.

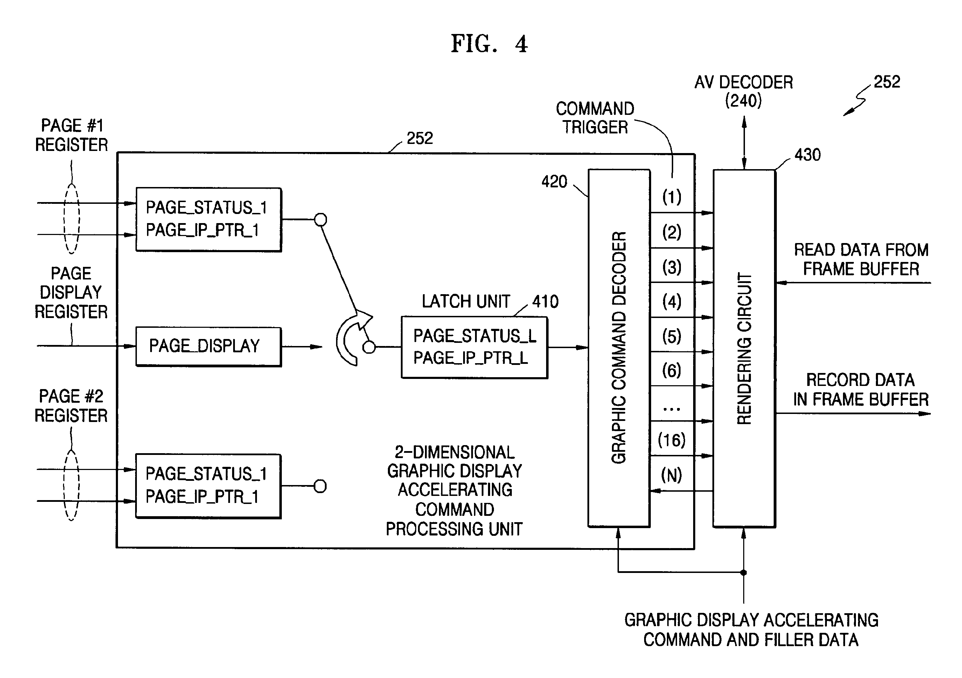

Figure 4 is a diagram explaining in detail the structure of the 2-dimensional graphic display accelerating command processing unit 252 shown in Figure 2.

Referring to Figure 4, the display accelerating command processing unit 252 includes a latch unit 410 for outputting a page, a graphic command decoder 420, and a rendering circuit 430.

The latch unit 410 reads a page display status and selects an active page. The graphic command decoder 420 reads the graphic display accelerating command data 324 stored by the presentation engine 250 described above, from the third memory, interprets the data, and executes a selected graphic display accelerating command in the rendering circuit 430. The graphic image output from the rendering circuit 430 is blended with moving pictures in the frame buffer 260, and stored. The 2-dimensional graphic image and moving pictures stored in the frame buffer are overlaid on one screen and displayed.

More specifically, referring to Figures 2, 3, and 5, for page setup, the presentation engine 250 stores the graphic display accelerating command data 324 generated by interpreting graphic data, in the third memory 224. A detailed process for converting graphic data into graphic display accelerating command data will be explained later. Also, the presentation engine 250 reads a page status register (PAGE_STATUS_1 or PAGE_STATUS_2) in order to learn the display status of a 2-dimensional graphic page. If the status of the read page is busy, the page is in a state of being displayed on the screen by the display accelerating command processing unit 252, and another page whose page status is idle is selected. Also, with the value of a register (PAGE_IP_PTR_1 or PAGE_IP_PTR 2) indicating a graphic command, the start address of the graphic display accelerating command data of a page selected in the third memory is set. Next, in order for the display accelerating command processing unit 252 to display the selected page on the screen, the selected page is set with the page display register (PAGE_DISPLAY) value. This series of processes is referred to as a page setup process.

Meanwhile, the latch unit 410 included in the display accelerating command processing unit 252 reads a register value set by the presentation engine 250 as described above, selects a page to be displayed, and reads graphic display accelerating command data corresponding to the selected page from the third memory. The graphic command decoder 420 included in the display accelerating command processing unit 252 interprets the read graphic display accelerating command data, and executes a selected graphic display accelerating command among the data, through the rendering circuit 430. A graphic image output from the rendering circuit 430 is blended with moving pictures in the frame buffer memory 260 and stored. The stored graphic image and moving pictures are overlaid and displayed on the screen.

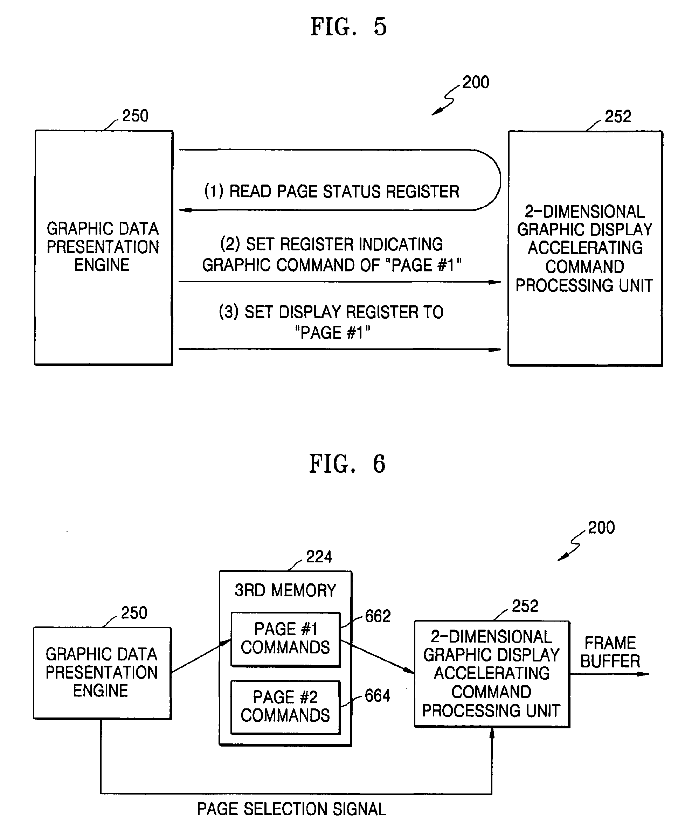

Figure 5 illustrates a page setup process of a 2-dimensional graphic decoder.

Based on the process described above with reference to Figure 4, the page setup process is summarized as follows. That is, the presentation engine 250 (1) reads the page status register (PAGE_STATUS_1), (2) sets a register (PAGE_IP_PTR_1) indicating the graphic command of a page in an idle state, and (3) sets a page display register (PAGE_DISPLAY) indicating a selected page as a display page. Through the page setup process, the presentation engine 250 fully completes preparation to draw 2-dimensional graphic. Then, the display accelerating command processing unit 252 interprets the graphic display accelerating command data stored in the third memory and draws a 2-dimensional graphic.

Figure 6 illustrates a process for accelerating graphic display through a page setup process.

Referring to Figure 6, the presentation engine 250 and the display accelerating command processing unit 252 can output graphic data to the frame buffer by using two page control registers alternately. That is, the presentation engine 250 alternately stores graphic display accelerating command data for pages in an idle state page #1 662 and page #2 664 in advance, and the display accelerating command processing unit 252 alternately executes graphic display accelerating command data stored in page #1 662 and page #2 664 such that graphic processing performance can be enhanced. Also, graphic animation in a page flipping method can be operated, and this flipping page can be extended to a 2 or more page (triple flipping page) method.

In particular, in case of the presentation engine 250 which has a number of factors to be considered and therefore has a complicated logic structure, it is preferable that the presentation engine 250 is implemented by software in order to support display of a plurality of curves and polygons. This is to generate and store a flexible combination of graphic display accelerating commands. Meanwhile, it is preferable that the display accelerating command processing unit 252 which needs much processing time is implemented by a hardware circuit. Thus, by using the third memory, preparing in advance and storing display accelerating command data of a graphic to be output (a step for generating a polygon and scan conversion to be explained later), and reading the stored graphic display accelerating command data from the third memory and rendering a 2-dimensional graphic (a step for pixel rendering to be explained later) are separated and independently implemented such that a bottleneck phenomenon occurring when graphic animation having a plurality of frames is output can be reduced.

Also, the present invention is explained on the basis of a case where a graphic display accelerating command is executed in units of pages. However, this is just an embodiment and according to the design method of the 2-dimensional graphic decoder 200, the present invention can be modified and implemented in a variety of ways, including executing the graphic display accelerating command in units of objects as in the case where immediately after a polygon is generated, it is converted into a graphic display accelerating command and the command is executed.

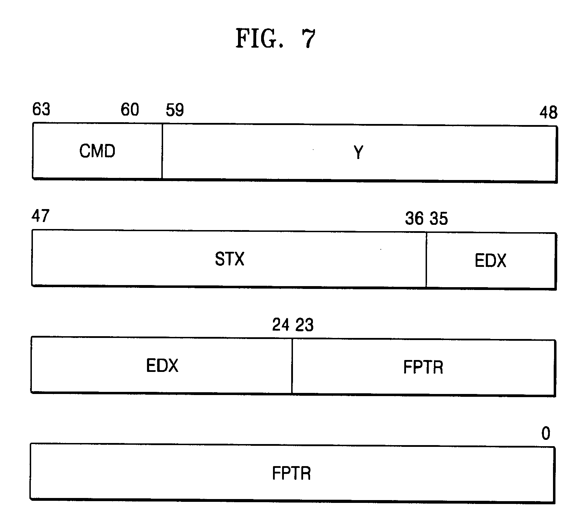

The graphic display accelerating command executed by the 2-dimensional graphic decoder 200 described above will now be explained in detail. Figure 7 illustrates an example of the structure of a graphic display accelerating command used in a 2-dimensional graphic decoder according to the present invention.

Referring to Figure 7, the graphic display accelerating command according to a preferred embodiment of the present invention has a 64-bit command structure. It is preferable that this command set is formed with commands for displaying a variety of polygon data.

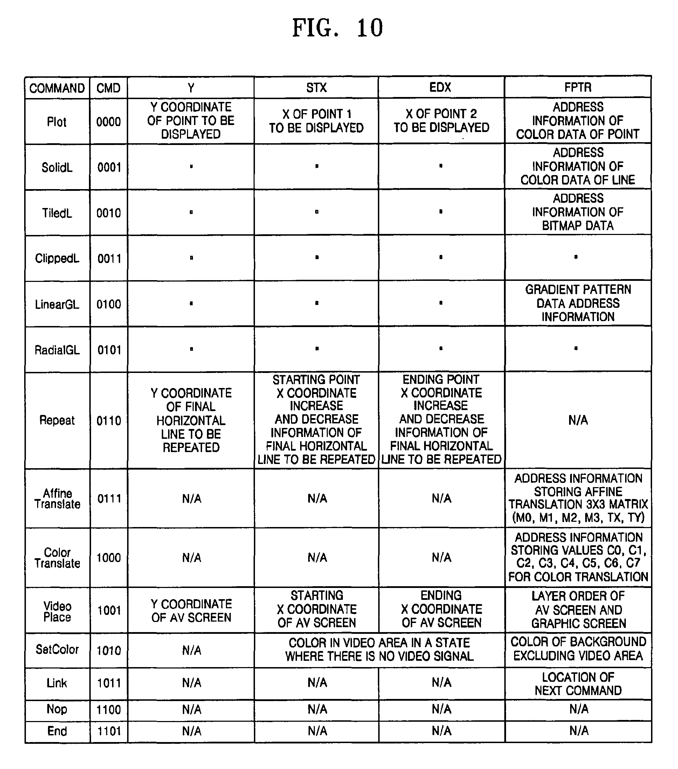

More specifically, it is preferable that the graphic display accelerating command includes as parameters a command identifier (CMD), the vertical location (Y), the horizontal starting position (STX) and the horizontal ending position (EDX) of a polygon, and information on draw and filler data of a graphic (FPTR). These parameters can be modified and used depending on the type of a command to be executed. A specific example of a graphic display accelerating command will be explained later with reference to Figure 10.

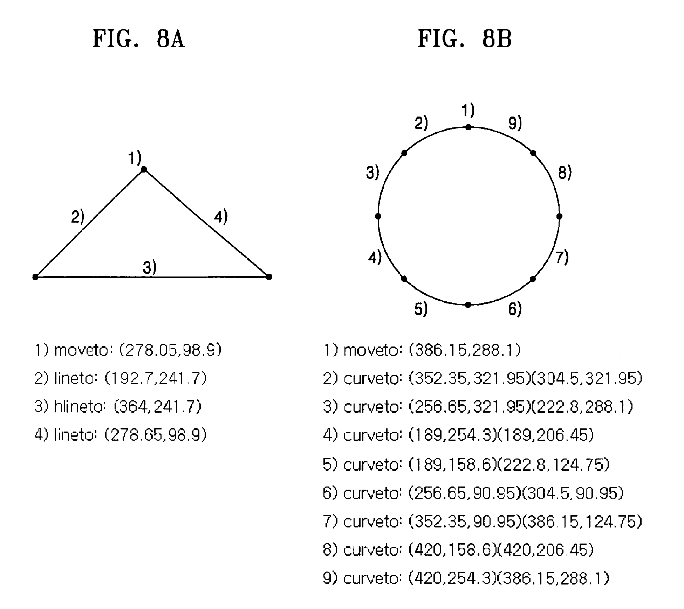

Figure 8 illustrates an example of 2-dimensioanl vector graphic expressed by polygon data.

Referring to Figure 8, a variety of polygon data are shown. In Figure 8(A), a triangle is expressed, and in Figure 8(B), a circle is expressed. According to the conventional graphic accelerator, a triangle can be expressed by using a move command (moveto), a line draw command (lineto), a horizontal line draw command (hlineto), and a vertical line draw command (vlineto) with using (x, y) coordinates. Also, a circle can be expressed by using a move command (moveto) with using (x, y) coordinates and a curve draw command (curveto) with expressing an intermediate point. That is, in the conventional technology, used is the graphic display acceleration processing method by which graphic data is classified into a plurality of basic figures, and by adding basic figure drawing functions, for example, a move command, a line draw command, and a horizontal line draw command, to the graphic display accelerator circuit, 2-dimensional graphics are rapidly drawn.

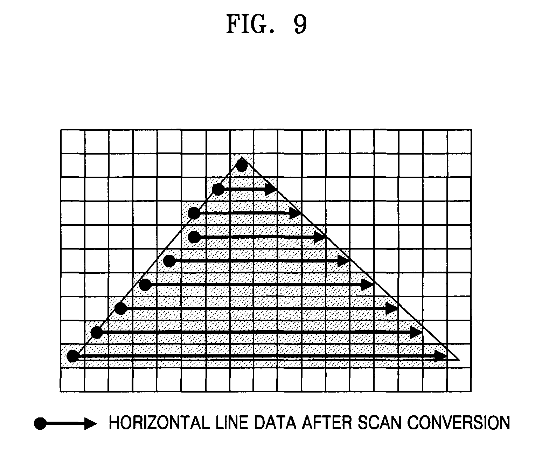

Meanwhile, in the present invention, in order to process drawing more varieties of figures, used is a method by which as shown in Figure 9, the presentation engine 250 performs scan conversion of polygon data and then, based on the horizontal or vertical line draw command generated as the result of the scan conversion, a graphic display accelerating command is generated.

Figure 9 illustrates the result of scan conversion of the 2-dimensional vector graphic shown in Figure 8. As shown in Figure 9, if the vertical location (Y), horizontal starting location (STX), horizontal ending location (EDX), and horizontal filler data information (FPTR) of each of a plurality of horizontal lines obtained by performing scan conversion of a triangle polygon are determined, the corresponding polygon can be drawn. According to the characteristic of filler data, a solid polygon can also be drawn. This provides an advantage that a more complex figure can be quickly drawn with relatively much simply constructed commands that those of the accelerating method using the conventional basic figure drawing functions described above with reference to Figure 8.

Figure 10 illustrates an example of a graphic display accelerating command according to the present invention.

Referring to Figure 10, the graphic display accelerating commands (that is, horizontal line draw commands) 324 according to the present invention can include a command to draw a pixel formed with one color (Plot), a command to draw a solid line formed with one color (SolidL), a command to draw a tiled bitmap line (TiledL), a command to draw a clip bitmap line (ClippedL), a command to draw a linear gradient line (LinearGL), and a command to draw a radial gradient line (RadialGL).

Also, as auxiliary command of the command to draw a horizontal line, a command (Repeat) to repeat the horizontal coordinates of the horizontal draw command executed immediately before, until the horizontal coordinates become that of Y, by increasing or decreasing the starting point (STX) and the ending point (EDX), an Affine translation command (AffineTranslate) for setting Affine translation values (M0, M1, M2, M3) or locations (TX, TY) to a bitmap image or a gradient pattern applied to the command to draw a horizontal line, and a color translation command (ColorTranslate) for color change (C0, C1, C2, C3, C4, C5, C6, C7) of a drawn horizontal line are included in the graphic display accelerating commands 324.

Furthermore, as commands for controlling interpretation and execution of a command, a branch command (Link) for branching to a location of a predetermined address to execute a horizontal line draw command, an end command (End) to stop execution of a command, and a execution delay command (Nop) for delaying execution of a command for a predetermined time are included in the graphic display accelerating commands 324.

Also, as video display control commands to be used for synthesis with a 2-dimensional AV image, a command (VideoPlace) specifying the location, size and layer of a display image of AV data, and a command (SetColor) specifying the color of the background excluding a video screen area and the color of the video screen area in a state where there is no video signal are included in the graphic display accelerating commands 324.

In Figure 10, an embodiment showing the relations between the graphic accelerating commands described above and their parameters is shown. That is, Y indicates the vertical location of a polygon, STX indicates the horizontal starting location, EDX indicates the horizontal ending location, and FPTR indicates drawing and filling data indication information of a graphic. In particular, FPTR is made to indicate the address of a data structure having bitmap data, gradient patterns, color indication information, and various auxiliary data. Accordingly, execution of a complicated command can be simplified. Auxiliary data includes the size of a bitmap, a color table of bitmap data, Affine translation values, and color translation values.

Of course, the graphic display accelerating command 324 formed with the horizontal line draw command can be modified in a variety of shapes for implementation. For example, instead of performing scan conversion in the horizontal direction and using a command formed with a horizontal line draw command as shown in Figure 9, a command formed with a vertical line draw command by performing scan version in the vertical direction can be implemented to be used.

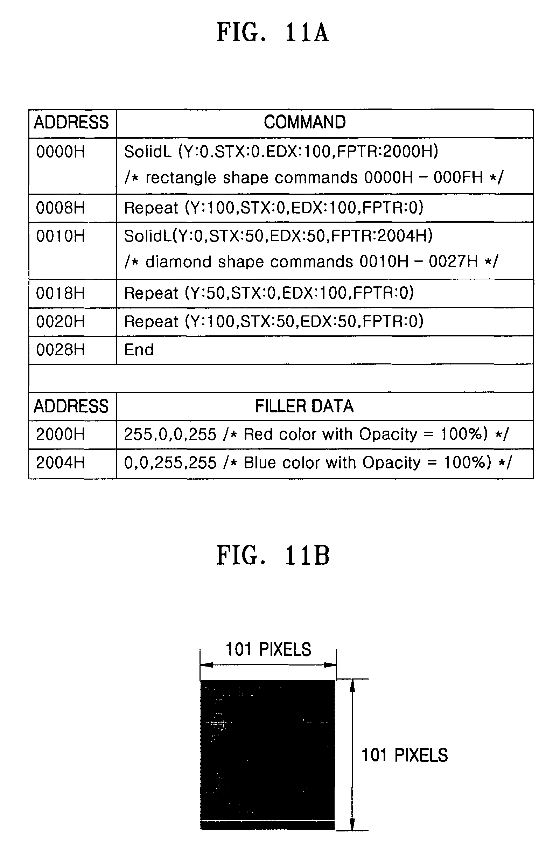

More specifically, Figure 11A illustrates an example of a graphic display accelerating command and filler data 324, and Figure 11B illustrates a graphic image displayed when the graphic display accelerating command and filler data shown in Figure 11A are executed.

Referring to Figure 11A, in order to express a predetermined polygon, the solid line draw command (SolidL) described with reference to Figure 10 is first executed. A solid line corresponding to 101 pixels from horizontal starting location 0 to horizontal ending location 100, beginning from vertical location 0, is drawn. At this time, filler data of address 2000H indicated by the FPTR parameter of the solid line draw command is applied. That is, 101 pixels are filled with 100% opacity (or transparency) red color. Secondly, an identical operation, that is, the solid line draw command, is repeatedly performed by the repeat command (Repeat), until the vertical location becomes 100. Thirdly, again according to the solid line draw command, a line corresponding to 1 pixel from horizontal starting location 50 and horizontal ending location 50 for vertical location 0 is drawn. At this time, filler data of address 2004H indicated by the FPTR parameter is applied and 1 pixel is filled by transparency 100% blue color. Fourthly, by the repeat command, the solid line draw command is repeated until the vertical location becomes 50. By the fifth command, the solid line draw command is repeated from vertical location 50 to vertical location 100 and the execution is finished. Figure 11B shows the result of executing all the command set shown in Figure 11A.

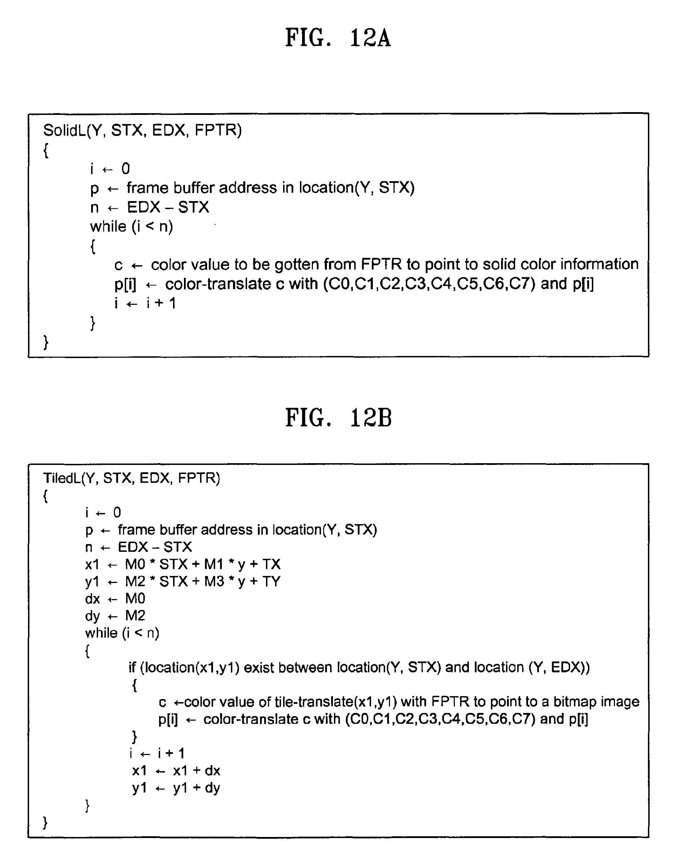

Figures 12A through 12E illustrate an example of a code implementing a horizontal line draw command that is a graphic display accelerating command according to the present invention.

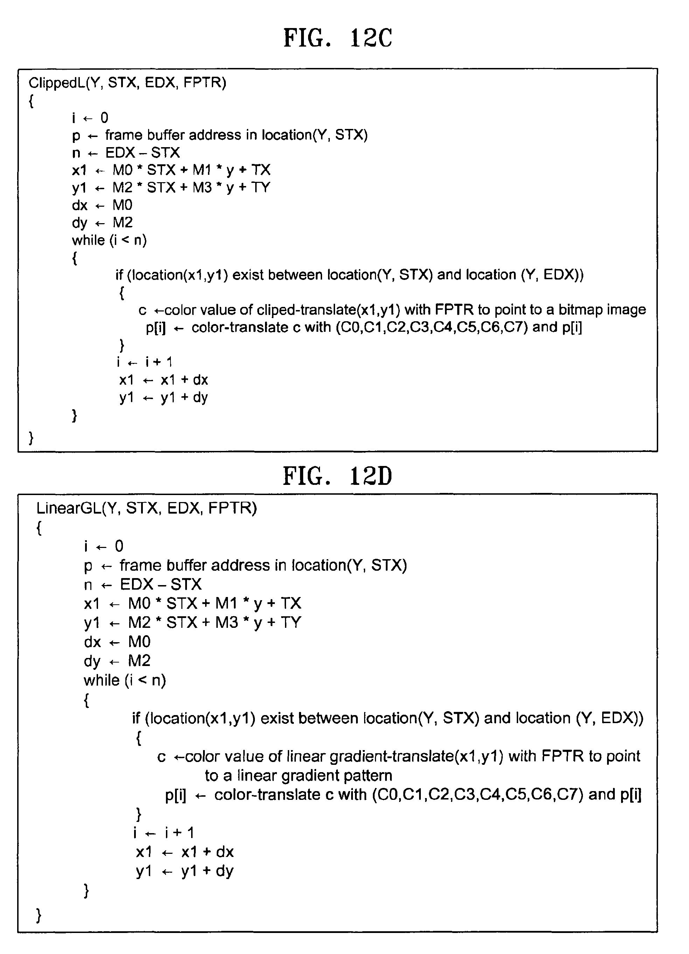

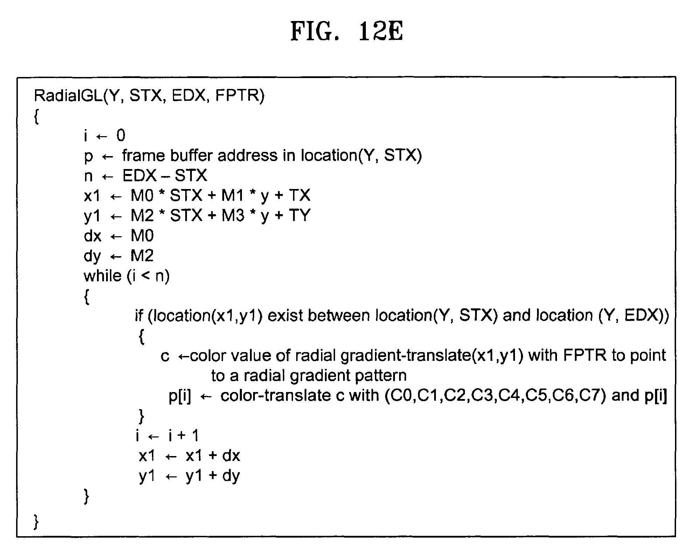

SolidL() function of Figure 12A is a description code of a solid line draw command formed by one color. TiledL() function of Figure 12B is a description code of a tiled bitmap draw command, and ClippedL() function of Figure 12C is a description code of a clip bitmap line draw command. Also, LinearGL () function of Figure 12D is a description code of a linear gradient line draw command, and RadialGL () function of Figure 12E is a description code of a radial gradient line draw command.

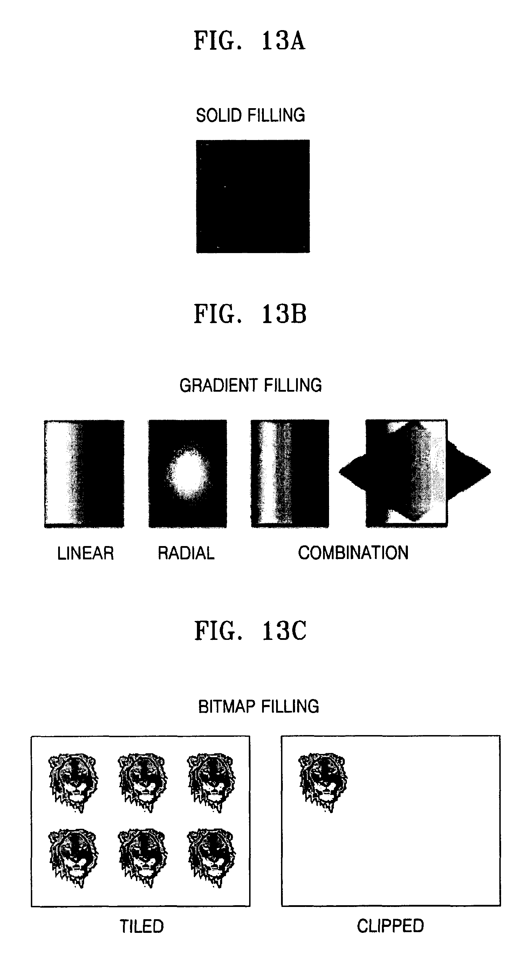

Figures 13A through 13C illustrate an example of filler data according to the present invention. Figure 13A is an example of solid filling, Figure 13B is an example of gradient filling in which a color changes gradually, and Figure 13C shows bitmap filling in which an identical image is repeated to fill the screen, and clip filling.

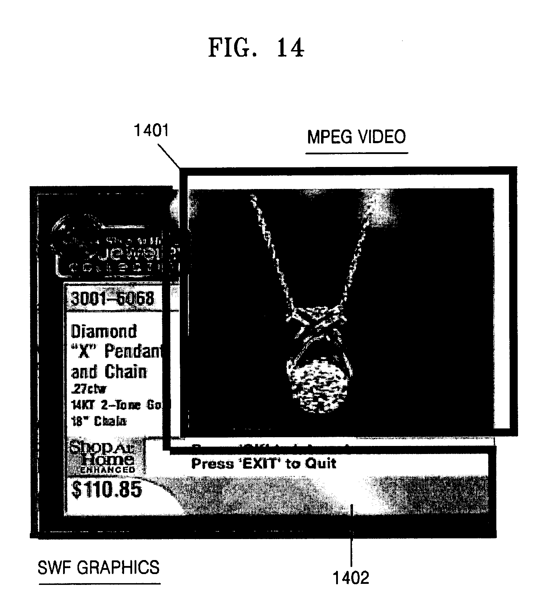

Figure 14 illustrates an application example of the present invention in which moving pictures in which 2-dimensional graphics and AV data are decoded are blended and displayed on one screen.

Referring to Figure 14, a moving picture 1401 output by decoding MPEG compression encoded AV data and a graphic image 1402 output by the 2-dimensional decoder 200 based on a graphic accelerating command are blended and displayed on one screen. Thus, an image reproducing apparatus, such as a DVD and a DTV, according to the present invention can provide interactive contents displaying moving pictures together with related 2-dimensional graphic images. In particular, 2-dimensional graphic including high speed animation can be provided. Also, by using a graphic display accelerating command stored in the third memory, the functions of the presentation engine 250 and the display accelerating command processing unit 252 are separated and independently operating. Accordingly, when a graphic is displayed, the load to the CPU required for the rendering process can be reduced and the graphic display performance is enhanced.

The external channel storing image data such as AV data and graphic data according to the present invention includes a storage medium embedded in an image reproducing apparatus such as a hard disc drive, and a removable storage medium that can be easily attached and detached, such as an optical disc or a memory card. In case of an optical disc, a CD-ROM and Bluray-Disc can be included, and an optical disc which will be developed in the future can be included. Also, a network medium providing contents through a network, such as the Internet, is included.

Also, the image reproducing apparatus of the present invention can be implemented as one integrated circuit, and can also be implemented as a distributed system in which respective function blocks are divided and implemented in a plurality of systems connected through a network.

The present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

According to the present invention as described above, a command based 2-dimensional graphic decoder or an image reproducing apparatus including the decoder accelerates display of a 2-dimensional graphic image by using a graphic display accelerating command using a horizontal line or a vertical line draw command, such that a 2-dimensional graphic image can be provided with an enhanced display frame rate, and by blending it with decoded moving pictures, interactive contents can be provided. In particular, 2-dimensional graphic data is decoded based on a graphic display accelerating command formed by a horizontal or vertical line draw command which has a relatively simpler structure compared to the conventional graphic accelerator using basic figure draw functions. Accordingly, the hardware circuit implementation method of a 2-dimensional graphic display accelerator is simplified, the design cost is lowered, and the size of the hardware circuit can be reduced such that the cost performance ratio is improved.

Furthermore, even in an image reproducing apparatus with a low speed CPU, 2-dimensional graphic animation with fast display and various curve expressions supported by a computer can be provided.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for accelerating graphic display comprising:
interpreting graphic data (322), converting graphic data (322) into at least one simplified accelerating command data (324), and storing the data; and
by executing at least one stored accelerating command data (324), displaying a graphic image, wherein storing the data and displaying the graphic image are performed independently.

2. The method of claim 1, wherein the accelerating command data (324) includes at least one horizontal line draw command or vertical line draw command which is obtained by interpreting the graphic data (322), generating a polygon, and performing scan conversion of the generated polygon, and is to quickly draw the graphic image on the screen.

3. The method of claim 1 or 2, wherein the converting and storing is performed by separate software in order to interpret a variety of the graphic data (322).

4. The method of claim 1, 2 or 3 wherein in the converting and storing, at least one of the converted accelerating commands is stored in a predetermined memory area (224).

5. The method of any preceding claim, wherein the displaying of the graphic image is performed by a separate hardware circuit in order to increase the display speed of the graphic image.

6. The method of any preceding claim, wherein the accelerating command data (324) includes a command to draw a pixel.

7. The method of any preceding claim, wherein the accelerating command data (324) includes a command to draw a horizontal line or a vertical line with one color.

8. The method of claim 9, wherein the accelerating command data (324) includes a command to draw a horizontal line or a vertical line to which a bitmap image pattern is applied.

9. The method of any preceding claim, wherein the accelerating command data (324) includes a command to draw a horizontal line or a vertical line to which a linear gradient image pattern is applied.

10. The method of any preceding claim, wherein the accelerating command data (324) includes a command to draw a horizontal line or a vertical line to which a radial gradient image pattern is applied.

11. The method of any preceding claim, wherein the accelerating command data (324) includes a command to repeat a previously executed horizontal or vertical line draw command, to a predetermined coordinate of a horizontal line or a vertical line by increasing or decreasing the vertical coordinate or horizontal coordinate of the previous command.

12. The method of any preceding claim, wherein the accelerating command data (324) includes an Affine translation command (AffineTranslate) adjusting the size or location of a bitmap image or a gradient pattern as filler data applied to a command to draw a horizontal line or a vertical line.

13. The method of any preceding claim, wherein the accelerating command data (324) includes a color translation command (ColorTranslate) translating colors of pixels drawn on a horizontal line or a vertical line.

14. The method of any preceding claim, wherein the accelerating command data (324) includes a branch command to branch to the location of the accelerating command data (324) at another address, and execute the accelerating command of the address.

15. The method of any preceding claim, wherein the accelerating command data (324) includes a command specifying the display location and layer of moving pictures which are blended with the graphic image and displayed.

16. The method of any preceding claim, wherein the accelerating command data (324) includes a command specifying the color of a background area excluding the moving picture area which is blended with the graphic image and displayed, and the color of the moving picture area in a state where there is no video signal.

17. A graphic decoder comprising:
an accelerating command conversion unit (250) decoding graphic data (322) read through an external channel, converting the data into at least one simplified accelerating command data (324), and storing the accelerating command data (324) in a predetermined memory area (224); and
an accelerating command processing unit (252) executing at least one stored accelerating command data (324) item and displaying a graphic image, wherein the accelerating command conversion unit (250) and the accelerating command processing unit (252) operate independently to each other by using the predetermined memory area (224).

18. The graphic decoder of claim 17, wherein the accelerating command conversion unit (250) generates a polygon by interpreting the graphic data (322), converts the graphic data (322) into at least one accelerating command data (324) item obtained by performing scan conversion of the generated polygon, and stores the accelerating command data (324) in the predetermined memory area (224), and the accelerating command data (324) includes a horizontal line draw command or a vertical line draw command to quickly draw the graphic image on the screen.

19. The graphic decoder of claim 17 or 18, wherein the accelerating command conversion unit (250) is implemented by separate software in order to interpret a variety of the graphic data (322).

20. The graphic decoder of claim 17, 18 or 19, wherein the accelerating command processing unit (252) is implemented as a separate hardware circuit in order to increase the display speed of the graphic image.

21. The graphic decoder of claim 17, 18, 19 or 20, wherein the external channel includes a detachable storage medium that is easily detachable from a reproducing apparatus, a storage medium embedded in a reproducing apparatus, or a network medium.

22. A reproducing apparatus comprising the graphic decoder of any of claims 17 to 21.

23. The apparatus of claim 22, wherein a graphic image output through the graphic decoder and moving pictures output by decoding audio-visual (AV) data read from the external channel are overlaid and one image is displayed.

24. A computer readable recording medium having embodied thereon a computer program for executing the method of any of claims 1 to 16.
